# EUROPÄISCHE PATENTANMELDUNG

(11) **EP 4 101 601 A1**
(43) Veröffentlichungstag der Anmeldung: **14.12.2022**
(21) Anmeldenummer: 21178683.5
(22) Anmeldetag: 10.06.2021
(51) Int. Cl.: B25J 9/00, G05B 19/042, B25J 9/16, G05D 1/00

(54) **REDUNDANZ-STEUERUNG IN EINEM VERTEILTEN AUTOMATISIERUNGSSYSTEM**

(71) Anmelder: Gestalt Robotics GmbH, 10997 Berlin (DE)
(72) Erfinder: LAMBRECHT, Jens, 12047 Berlin (DE); STAUFENBIEL, Thomas, 12159 Berlin (DE); FUNK, Eugen, 12524 Berlin (DE); NGUYEN, The Duy, 10243 Berlin (DE)
(74) Vertreter: v. Bezold & Partner Patentanwälte - PartG mbB

(57) **Zusammenfassung**

Die Erfindung betrifft u.a. ein Verfahren zur Redundanz-Steuerung in einem verteilten Automatisierungssystem (10), vorzugsweise Echtzeit-Automatisierungssystem (10), zum Betreiben einer Clientvorrichtung (12) des verteilten Automatisierungssystems (10). Das Verfahren weist ein mittels der Clientvorrichtung (12) durchgeführtes Überwachen einer Kommunikation zwischen der Clientvorrichtung (12) und einer ersten, die Clientvorrichtung (12) betreibenden Recheninfrastruktur (14) des verteilten Automatisierungssystems (10) auf ein Auftreten einer Störung auf. Das Verfahren weist ein mittels der Clientvorrichtung (12) beim Auftreten der Störung durchgeführtes Anweisen einer zweiten Recheninfrastruktur (16) des verteilten Automatisierungssystems (10), die Clientvorrichtung (12) zu betreiben, auf.

## Beschreibung

### Technisches Gebiet

Die vorliegende Offenbarung betrifft ein Verfahren zur Redundanz-Steuerung in einem verteilten Automatisierungssystem. Die vorliegende Offenbarung betrifft ferner ein verteiltes Automatisierungssystem und ein Computerprogrammprodukt.

### Hintergrund

Cloud- und Edge-Computing ermöglichen die flexible Nutzung externer Rechenleistung und dies skalierbar und serviceorientiert. Dies ist zunehmend auch für die computerbasierte Steuerung von mobilen oder stationären Maschinen oder Anzeigegeräten interessant, da diese sonst den Restriktionen der lokal verbauten Rechnerinfrastruktur (On-Premises- bzw. Lokal-Berechnungen i.d.R. über Industrie-PC oder Embedded-Hardware) unterliegen.

Die Nutzung externer Rechenressourcen durch Auslagerung von Softwarefunktionen kann verschiedene Vorteile durch die theoretisch unendliche Rechenleistung bringen. Beispielsweise ist es möglich, leistungsstarke und aufwändige KI-Algorithmen zu berechnen sowie verschiedene Funktionen parallel zur gleichen Zeit zu berechnen. Eine höhere Verfügbarkeit mobiler Geräte oder Maschinen, bspw. mobile Transportsysteme (AGVs), AR/VR-Brillen, kann durch Auslagerung von Rechenleistung erreicht werden. Es bestehen geringere Anforderungen an die lokale Hardware der Maschinen. Entlang des Lebenszyklus der Geräte/Software lassen sich ebenfalls verschiedene Vorteile realisieren, wie z. B. einfachere Inbetriebnahme, Updates On-The-Fly, nahtlose Integration von M2M-Kommunikation und Mehrwert-Services, einfaches Teilen von Wissen und Informationen, Transparenz und Ermöglichung neuer Geschäftsmodelle (bspw. Pay per Use) durch Monitoring-Services, nahtloses Wechseln zwischen Simulation und realen Geräten in der Softwareentwicklung usw.

Auf dieser Basis besteht auch eine zunehmende Motivation, Steuerungs- und Visualisierungsfunktionen sowie Sensordatenverarbeitung mit harten oder weichen Echtzeitanforderungen auszulagern. Herkömmlich bedeutet dies, dass ein offener Steuerungs- oder Verarbeitungszyklus oder geschlossener Regelkreis aufrechterhalten werden soll bzw. muss und bei fehlender Reaktion der externen Softwaredienste die Gerätefunktionen nur eingeschränkt oder gar nicht möglich sind.

Es ist möglich, dass Virtualisierungstechniken, z. B. in einer Public Cloud, Redundanz unterstützen können. Die Redundanz kann dabei nur innerhalb der eigenen Infrastruktur, z. B. durch die Bereitstellung von Redundanz für einzelne Software-Dienste, unterstützt werden. Es ist auch möglich, dass Redundanzkonzepte für Echtzeitanforderungen auf Netzwerkebene, z. B. durch zeitkritische Vernetzung, unterstützt werden können. Diese können bspw. spezielle Hardware, z. B. Switches oder Router, erfordern, um Verbindungsprobleme (Ausfall oder Störungen der Performance/QoS) auf einzelnen Routen zu erkennen und zu kompensieren. Bei diesen Konzepten kann die Redundanz der Netzwerkverbindung permanent genutzt und somit vorhandene Ressourcen dauerhaft belegt werden.

Dementsprechend gibt es einen Bedarf an einem praxistauglichen Echtzeit-Redundanzkonzept bei Ausfall oder (temporärer) Störung der Kommunikationskanäle oder einer gesamten Infrastruktur, das eine nahtlose Weiterfunktion der Geräte oder Maschinen ermöglichen kann und bevorzugt die Kommunikations- als auch die Recheninfrastruktur integrativ betrachtet.

Der Erfindung liegt die Aufgabe zu Grunde, eine verbesserte Technik zur Redundanz-Steuerung für ein verteiltes Automatisierungssystem, in dem eine Clientvorrichtung von einer externen Recheninfrastruktur betrieben wird, zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Verfahren zur Redundanz-Steuerung in einem verteilten Automatisierungssystem, vorzugsweise Echtzeit-Automatisierungssystem, zum Betreiben einer Clientvorrichtung des verteilten Automatisierungssystems. Das Verfahren weist ein mittels der Clientvorrichtung durchgeführtes Überwachen einer Kommunikation zwischen der Clientvorrichtung und einer ersten, die Clientvorrichtung betreibenden Recheninfrastruktur (z. B. Server-Recheninfrastruktur) des verteilten Automatisierungssystems auf ein Auftreten einer Störung auf. Das Verfahren weist ein mittels der Clientvorrichtung beim Auftreten der Störung (bzw. beim Erkennen des Auftretens der Störung) durchgeführtes Anweisen einer zweiten Recheninfrastruktur (z. B. Server-Recheninfrastruktur) des verteilten Automatisierungssystems, die Clientvorrichtung zu betreiben, auf.

Vorteilhaft ermöglicht das Verfahren eine durch die Clientvorrichtung gesteuerte Herstellung von (z. B. aktiver und/oder passiver) Redundanz in einem verteilten Automatisierungssystem, die besonders bevorzugt bei Nutzung Echtzeitkritischer oder unsicherheitsbehafteter Softwareservices zum Gewährleisten eines Betriebs der Clientvorrichtung im Störungsfall angewendet werden kann. Bevorzugt kann die Clientvorrichtung damit eine Kompensation von temporären oder dauerhaften Ausfällen einzelner Kommunikationskanäle und/oder der ersten Recheninfrastruktur in einem verteilten Automatisierungssystem, in dem Echtzeit-kritische Softwarefunktionen ausgelagert werden, bereitstellen. Das Verfahren kann sich bevorzugt dadurch auszeichnen, dass keine spezielle Netzwerkinfrastruktur zur Herstellung von Redundanzen notwendig ist. Das Verfahren kann sich vorzugweise auch dadurch auszeichnen, dass eine integrative Betrachtung der Rechen- und Netzwerkressourcen durch das mittels der Clientvorrichtung durchgeführte Überwachen der Kommunikation auf das Auftreten der Störung ermöglicht wird.

In einem Ausführungsbeispiel erfolgt das Anweisen der zweiten Recheninfrastruktur über eine ständig aktiv gehaltene Kommunikationsverbindung zwischen der Clientvorrichtung und der zweiten Recheninfrastruktur. Vorteilhaft kann damit eine sehr reaktionsschnelle Übernahme des Betriebs der Clientvorrichtung durch die zweite Recheninfrastruktur erfolgen. Vorzugsweise kann die zweite Recheninfrastruktur als heiße Redundanz zu der ersten Recheninfrastruktur betrieben werden.

In einem weiteren Ausführungsbeispiel weist das Anweisen der zweiten Recheninfrastruktur ein Herstellen einer Kommunikationsverbindung zwischen der Clientvorrichtung und der zweiten Recheninfrastruktur auf, initiiert mittels der Clientvorrichtung. Vorteilhaft kann damit eine ressourcenschonende Redundanz ermöglicht werden. Vorzugsweise kann die zweite Recheninfrastruktur als warme, kalte oder Standby-Redundanz zu der ersten Recheninfrastruktur betrieben werden.

In einem weiteren Ausführungsbeispiel weist das Verfahren ferner ein mittels der Clientvorrichtung bei Wegfall der Störung durchgeführtes Anweisen der zweiten Recheninfrastruktur, das Betreiben der Clientvorrichtung zu beenden und/oder ein mittels der Clientvorrichtung bei Wegfall der Störung durchgeführtes Beenden einer Kommunikation mit der zweiten Recheninfrastruktur auf. Vorteilhaft kann damit so früh wie möglich wieder auf die erste Recheninfrastruktur zum Betreiben der Clientvorrichtung zurückgegriffen werden, was bspw. im Hinblick auf die nur temporäre Nutzung der zweiten Recheninfrastruktur und der Kommunikation mit dieser besonders ressourcenschonend sein kann.

In einem weiteren Ausführungsbeispiel weist das Verfahren ferner ein mittels der Clientvorrichtung bei Wegfall der Störung durchgeführtes Anweisen der ersten Recheninfrastruktur, die Clientvorrichtung wieder zu betreiben, auf. Optional kann das Verfahren ferner ein Übermitteln eines aktuellen Statusmodells, das einen aktuellen Zustand der Clientvorrichtung angibt, und/oder eines aktuellen Umgebungsmodells, das eine aktuelle Umgebung der Clientvorrichtung angibt, von der Clientvorrichtung und/oder der zweiten Recheninfrastruktur zu der ersten Recheninfrastruktur zum Verwenden beim (erneuten) Betreiben der Clientvorrichtung aufweisen. Vorteilhaft kann damit ebenfalls so früh wie möglich wieder auf die erste Recheninfrastruktur zum Betreiben der Clientvorrichtung zurückgegriffen werden, was besonders ressourcenschonend sein kann. Zudem kann die erste Clientvorrichtung zum (erneuten) Betreiben der Clientvorrichtung besonders vorteilhaft auf ein aktualisiertes Statusmodell der Clientvorrichtung zurückgreifen.

In einem weiteren Ausführungsbeispiel ist die Clientvorrichtung eine Maschine, ein (z. B. stationärer oder mobiler) Roboter, ein Endgerät oder ein, vorzugsweise autonomes, Fahrzeug.

In einer Ausführungsform weist die Störung eine Trennung der Kommunikation, einen Ausfall der Kommunikation, ein Überschreiten einer vorgegebenen Antwortzeit (z. B. von der ersten Recheninfrastruktur), ein Unterschreiten einer vorgegebenen Datentransfergeschwindigkeit (z. B. mit der ersten Recheninfrastruktur) und/oder ein Abweichen von einer Dienstgüte-Anforderung bezüglich der Kommunikation auf.

In einer weiteren Ausführungsform weist das Verfahren ferner ein bei Auftreten der Störung eigenständiges Betreiben der Clientvorrichtung mit einem verringerten Funktionsumfang im Vergleich zum Betreiben mittels der ersten Recheninfrastruktur, bis die zweite Recheninfrastruktur die Clientvorrichtung betreibt, auf. Alternativ kann bspw. mittels der Clientvorrichtung bei Auftreten der Störung wahlweise das Anweisen der zweiten Recheninfrastruktur oder (bzw.) ein eigenständiges Betreiben der Clientvorrichtung mit einem verringerten Funktionsumfang im Vergleich zum Betreiben mittels der ersten Recheninfrastruktur durchgeführt werden, vorzugsweise in Abhängigkeit von der aufgetretenen Störung, von einem Status der Clientvorrichtung und/oder einem Status der zweiten Recheninfrastruktur.

In einer weiteren Ausführungsform wird die Clientvorrichtung mittels eines (z. B. ständig aktualisierten) Statusmodells, das einen jeweils aktuellen Zustand der Clientvorrichtung angibt, von der ersten Recheninfrastruktur betrieben, und das Verfahren weist ferner ein Übermitteln, vorzugsweise fortlaufendes Übermitteln, des Statusmodells von der ersten Recheninfrastruktur zu der zweiten Recheninfrastruktur, während die erste Recheninfrastruktur die Clientvorrichtung betreibt, auf. Das Verfahren kann optional ferner ein mittels der zweiten Recheninfrastruktur durchgeführtes Verwenden des übermittelten Statusmodells zum Betreiben der Clientvorrichtung, während die zweite Recheninfrastruktur die Clientvorrichtung bei Auftreten der Störung betreibt, aufweisen. Vorteilhaft kann damit gewährleistet werden, dass der zweiten Rechnerinfrastruktur stets ein aktuelles Statusmodell der Clientvorrichtung für einen potentiellen Redundanzbetrieb mittels der zweiten Recheninfrastruktur vorliegt.

In einer weiteren Ausführungsform wird die Clientvorrichtung mittels eines (z. B. ständig aktualisierten) Statusmodells, das einen jeweils aktuellen Zustand der Clientvorrichtung angibt, von der ersten Recheninfrastruktur betrieben, und das Verfahren weist ferner ein Übermitteln, vorzugsweise fortlaufendes Übermitteln, des Statusmodells von der ersten Recheninfrastruktur zu der Clientvorrichtung, während die erste Recheninfrastruktur die Clientvorrichtung betreibt, auf. Das Verfahren kann optional ferner ein mittels der Clientvorrichtung durchgeführtes Übermitteln des übermittelten Statusmodells an die zweite Recheninfrastruktur zum Betreiben der Clientvorrichtung beim Anweisen der zweiten Recheninfrastruktur aufweisen. Vorteilhaft kann damit gewährleistet werden, dass der zweiten Rechnerinfrastruktur zum Zeitpunkt der Übernahme des Betriebs der Clientvorrichtung ein aktuelles Statusmodell der Clientvorrichtung für den Redundanzbetrieb mittels der zweiten Recheninfrastruktur vorliegt.

Es ist möglich, dass die Clientvorrichtung mittels eines (z. B. ständig aktualisierten) Umgebungsmodells, das eine jeweils aktuelle Umgebung der Clientvorrichtung angibt, von der ersten Recheninfrastruktur betrieben wird, und das Verfahren ferner ein Übermitteln, vorzugsweise fortlaufendes Übermitteln, des Umgebungsmodells von der ersten Recheninfrastruktur zu der zweiten Recheninfrastruktur, während die erste Recheninfrastruktur die Clientvorrichtung betreibt, aufweist. Das Verfahren kann optional ferner ein mittels der zweiten Recheninfrastruktur durchgeführtes Verwenden des übermittelten Umgebungsmodels zum Betreiben der Clientvorrichtung, während die zweite Recheninfrastruktur die Clientvorrichtung bei Auftreten der Störung betreibt, aufweisen. Vorteilhaft kann damit gewährleistet werden, dass der zweiten Rechnerinfrastruktur stets ein aktuelles Umgebungsmodell der Clientvorrichtung für einen potentiellen Redundanzbetrieb mittels der zweiten Recheninfrastruktur vorliegt.

Es ist auch möglich, dass die Clientvorrichtung mittels eines (z. B. ständig aktualisierten) Umgebungsmodells, das eine jeweils aktuelle Umgebung der Clientvorrichtung angibt, von der ersten Recheninfrastruktur betrieben wird, und das Verfahren ferner ein Übermitteln, vorzugsweise fortlaufendes Übermitteln, des Umgebungsmodells von der ersten Recheninfrastruktur zu der Clientvorrichtung, während die erste Recheninfrastruktur die Clientvorrichtung betreibt, aufweist. Das Verfahren kann optional ferner ein mittels der Clientvorrichtung durchgeführtes Übermitteln des übermittelten Umgebungsmodells an die zweite Recheninfrastruktur zum Betreiben der Clientvorrichtung beim Anweisen der zweiten Recheninfrastruktur aufweisen. Vorteilhaft kann damit gewährleistet werden, dass der zweiten Rechnerinfrastruktur zum Zeitpunkt der Übernahme des Betriebs der Clientvorrichtung ein aktuelles Umgebungsmodell der Clientvorrichtung für den Redundanzbetrieb mittels der zweiten Recheninfrastruktur vorliegt.

In einer Ausführungsvariante weist das Verfahren ferner ein Vorhersagen eines Auftretens einer Störung der Kommunikation zwischen der Clientvorrichtung und der ersten Recheninfrastruktur basierend auf einer aktuellen Position der Clientvorrichtung, einer Dienstgüte-Überwachung der Kommunikation und/oder historischen Informationen über eine frühere Kommunikation zwischen der Clientvorrichtung und der ersten Recheninfrastruktur auf. Vorteilhaft kann damit prädiktiv auf etwaige Störungen bzw. auf ein erhöhtes Risiko zum Auftreten der Störungen reagiert werden.

In einer weiteren Ausführungsvariante weist das Verfahren ferner ein mittels der Clientvorrichtung bei Vorhersage des Auftretens der Störung durchgeführtes Anweisen der zweiten Recheninfrastruktur, die Clientvorrichtung in einem Zeitraum, zu dem die Störung vorhergesagt wurde, zu betreiben, auf. Alternativ kann das Verfahren bspw. bei Vorhersage des Auftretens der Störung ein eigenständiges Betreiben der Clientvorrichtung mit einem verringerten Funktionsumfang im Vergleich zum Betreiben mittels der ersten Recheninfrastruktur in einem Zeitraum, zu dem die Störung vorhergesagt wurde, aufweisen.

In einem weiteren Ausführungsbeispiel weist das Verfahren ein mittels der Clientvorrichtung und/oder der ersten Recheninfrastrukturvorrichtung durchgeführtes Entscheiden, ob die zweite Recheninfrastruktur zumindest temporär als heiße Redundanz oder als warme, kalte oder Standby-Redundanz zu der ersten Recheninfrastruktur betrieben wird, vorzugsweise in Abhängigkeit von einem Status der Clientvorrichtung, einem Status der ersten Recheninfrastruktur, der Kommunikation zwischen der Clientvorrichtung und der ersten Recheninfrastruktur und/oder einer Vorhersage eines Auftretens einer Störung der Kommunikation zwischen der Clientvorrichtung und der ersten Recheninfrastruktur, auf. Vorteilhaft kann damit eine Ressourcenoptimierung unter Gewährleistung einer optimalen Redundanzstrategie erreicht werden.

Optional kann das Verfahren ferner ein Betreiben der zweiten Recheninfrastruktur als heiße Redundanz oder als warme, kalte oder Standby-Redundanz in Abhängigkeit von dem Entscheiden aufweisen.

In einem weiteren Ausführungsbeispiel weist das verteilte Automatisierungssystem eine weitere Clientvorrichtung (z. B. konfiguriert bzw. ausgeführt entsprechend der Clientvorrichtung) auf, und das Verfahren weist ferner ein mittels der weiteren Clientvorrichtung durchgeführtes Überwachen einer Kommunikation zwischen der weiteren Clientvorrichtung und einer dritten, die weitere Clientvorrichtung betreibenden Recheninfrastruktur (z. B. Server-Recheninfrastruktur) des verteilten Automatisierungssystems auf ein Auftreten einer Störung auf. Optional kann das Verfahren ferner ein mittels der weiteren Clientvorrichtung bei Auftreten der Störung durchgeführtes Anweisen der zweiten Recheninfrastruktur des verteilten Automatisierungssystems, die weitere Clientvorrichtung zu betreiben, aufweisen. Vorteilhaft kann damit das Verfahren ressourcenschonend skaliert werden.

Ein weiterer Aspekt der vorliegenden Offenbarung betrifft ein verteiltes Automatisierungssystem mit einer Clientvorrichtung, einer ersten Rechnerinfrastruktur und einer zweiten Rechnerinfrastruktur (und optional einer weiteren Clientvorrichtung), wobei das verteilte Automatisierungssystem dazu konfiguriert ist, ein Verfahren wie hierin offenbart auszuführen. Vorteilhaft kann das verteilte Automatisierungssystem die gleichen Vorteile erzielen, die hierin bereits für das Verfahren erläutert wurden.

Ein weiterer Aspekt der vorliegenden Offenbarung betrifft ein Computerprogrammprodukt aufweisend mindestens ein computerlesbares Speichermedium mit darauf gespeicherten Anweisungen, die einen oder mehrere Rechner anweisen, ein Verfahren wie hierin offenbart auszuführen. Vorteilhaft kann das Computerprogrammprodukt die gleichen Vorteile erzielen, die hierin bereits für das Verfahren erläutert wurden.

Die zuvor beschriebenen bevorzugten Ausführungsformen und Merkmale der Erfindung sind beliebig miteinander kombinierbar.

Es wird ferner darauf hingewiesen kann sich der hierin verwendete Begriff "Steuern" je nach Konfiguration des verteilten Automatisierungssystems auf Steuerungsaufgaben und/oder Regelungsaufgaben und/oder Verarbeitungsaufgaben beziehen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Zum Steuern ist vorzugsweise eine Elektronik (z. B. mit Mikroprozessor(en) und Datenspeicher) auf Seiten der Clientvorrichtung, der ersten Recheninfrastruktur und der zweiten Recheninfrastruktur vorhanden.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische, vereinfachte Darstellung eines verteilten Automatisierungssystems gemäß einem Ausführungsbeispiel der vorliegenden Offenbarung; und
- Figur 2: eine schematische, vereinfachte Darstellung eines verteilten Automatisierungssystems gemäß einem weiteren Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Ausführliche Beschreibung

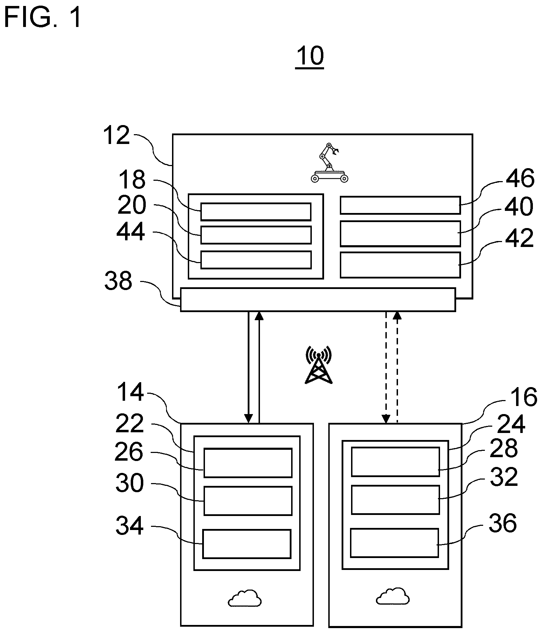

Die Figur 1 zeigt einverteiltes Automatisierungssystem 10. Das verteilte Automatisierungssystem 10 weist eine Clientvorrichtung 12, eine erste Recheninfrastruktur 14 und eine zweite Recheninfrastruktur 16 auf. Im verteilten Automatisierungssystem 10 kann die Clientvorrichtung 12 teilweise oder vollständig automatisiert betrieben werden, vorzugsweise von extern der Clientvorrichtung 12 mittels der ersten Recheninfrastruktur 14 im Normalbetrieb und mittels der zweiten Recheninfrastruktur 16 im Redundanzbetrieb.

Die Clientvorrichtung 12 kann mobil oder stationär ausgeführt sein. Die Clientvorrichtung 12 kann bspw. für Indoor- und/oder Outdooranwendungen ausgebildet sein. Die Clientvorrichtung 12 kann jegliche Art von Vorrichtung sein, bei der eine Auslagerung von Rechenleistung auf eine externe Recheninfrastruktur möglich ist. Bevorzugt werden hierbei rechenintensive Probleme auf die erste Recheninfrastruktur 14 bzw. im Redundanzbetrieb auf die zweite Recheninfrastruktur 16 ausgelagert. Die Clientvorrichtung 12 kann beispielsweise jegliche Art von Maschine, Fahrzeug oder Endgerät sein. Besonders bevorzugt ist die Clientvorrichtung 12 als ein Transportsystem oder ein stationärer oder mobiler Roboter ausgeführt, zum Beispiel als fahrerloses Transportfahrzeug (FTF, engl. AGV = automated guided vehicle) zum Materialtransport. Es ist auch möglich, dass die Clientvorrichtung 12 beispielsweise als ein automatisiertes/autonomes Kraftfahrzeug oder ein (Benutzer-) Endgerät (z. B. AR/VR-Datenbrille, Desktop-PC, Smartphone, Tablet, Laptop, Terminal usw.) ausgeführt ist. Besonders bevorzugt ist die Clientvorrichtung 12 ein mobiler Roboter mit autonomer Navigation, z. B. zum Materialtransport.

Die erste und zweite Recheninfrastruktur 14, 16 können jegliche Art von Vorrichtungen sein, auf die Rechenleistung von der Clientvorrichtung 12 ausgelagert werden können. Die Recheninfrastruktur 14 und/oder 16 kann beispielsweise eine Cloud-Servervorrichtungen, eine Edge-Servervorrichtung oder jegliche andere Servervorrichtung sein.

Die erste und zweite Recheninfrastruktur 14, 16 sind separat voneinander und separat zu der Clientvorrichtung 12 vorgesehen. Die erste und zweite Recheninfrastruktur 14, 16 können jeweils eine eigene Rechenhardware (z. B. Mikroprozessor(en), Speicher usw.) aufweisen. Es ist möglich, dass die erste und zweite Recheninfrastruktur 14, 16 im gleichen Rechenzentrum oder in unterschiedlichen Rechenzentren angeordnet sein.

Die Clientvorrichtung 12 kann mit der ersten und zweiten Recheninfrastruktur 14, 16 kabelgebunden und/oder kabellos kommunizieren. Es ist möglich, dass die erste und zweiten Recheninfrastruktur 14, 16 miteinander kabelgebunden und/oder kabellos miteinander kommunizieren können. Die Clientvorrichtung 12, die erste Recheninfrastruktur 14 und die zweite Recheninfrastruktur 16 können jeweils eine Kommunikationsschnittstelle zur Kommunikation aufweisen.

Eine kabelgebundene Kommunikation kann bspw. über ein BUS-System oder Ethernet implementiert sein. Eine kabellose Kommunikation kann bspw. über ein LiFi-Kommunikationsnetzwerk (engl.: light fidelity = optische drahtlose Technologie zur Datenübertragung im Spektrum des Lichts), ein WiFi-Kommunikationsnetzwerk (eng. wireless fidelity = Drahtlosnetzwerk anhand des IEEE-802.11-Standards), ein 4G-Kommunikationsnetwerk und/oder ein 5G-Kommunikationsnetzwerk usw. möglich sein. Bei der Kommunikation kann mindestens ein Kommunikationsprotokoll verwendet werden, z. B. TCP/IP.

Es ist möglich, dass die Clientvorrichtung 12 über mehrere unterschiedliche Kommunikationskanäle (z. B. LiFi-Kanal, WiFi-Kanal, 4G-Kanal, 5G-Kanal, BUS-System und/oder Ethernet usw.) mit der ersten Recheninfrastruktur 14 und/oder der zweiten Recheninfrastruktur 16 verbindbar ist. Es ist auch möglich, dass zwischen den unterschiedlichen Kommunikationskanälen gewechselt werden kann, z. B. bei Störung oder Verbindungsabbruch eines Kommunikationskanals. Der Wechsel kann von der Clientvorrichtung 12 oder von der jeweiligen Recheninfrastruktur 14 bzw. 16 initiiert werden. Der Wechsel kann ein Aktivieren des Kommunikationskanals, zu dem gewechselt werden soll, aufweisen. Das Aktivieren kann von der Clientvorrichtung 12 oder von derjeweiligen Recheninfrastruktur 14 bzw. 16 initiiert werden. Beispielsweise kann die Clientvorrichtung 12 über einen Kommunikationskanal A, z. B. WiFi, mit der ersten Recheninfrastruktur 14 verbunden sein. Bei Störung des Kommunikationskanals A kann ein Kommunikationskanal B, z. B. 4G oder 5G, aktiviert werden, um die Clientvorrichtung 12 (wieder) mit der ersten Recheninfrastruktur 14 zu verbinden. Mit dem Aktivieren wird auf den Kommunikationskanal B gewechselt. Ein Zurückwechseln kann ebenfalls möglich sein.

Die erste und zweite Recheninfrastruktur 14, 16 können jeweils einzeln die Clientvorrichtung 12 betreiben. Die erste Recheninfrastruktur 14 kann die Clientvorrichtung 12 im Normalbetrieb, d. h., wenn bspw. keine Störungen auftreten, betreiben. Die erste Recheninfrastruktur 14 kann auch als Haupt-Recheninfrastruktur bezeichnet werden. Die zweite Recheninfrastruktur 16 kann die Clientvorrichtung 12 anstelle der ersten Recheninfrastruktur 14 im Redundanzbetrieb betreiben. Die zweite Recheninfrastruktur 16 kann auch als Redundanz-Recheninfrastruktur bezeichnet werden.

Beispielsweise kann die Clientvorrichtung 12 mindestens eine Einrichtung 18 zur Erfassung eines aktuellen Sensorsignals und mindestens eine Einrichtung 20 zum Ausführen eines Betriebsbefehls aufweisen. Der erste und zweite Recheninfrastruktur 14, 16 können jeweils einen Software Stack bzw. eine Software-Komponente 22, 24 aufweisen.

Die Einrichtung 18 kann aktuelle Sensorsignale von einer oder mehreren Quellen erfassen und ausgeben. Sensorsignale können von der Einrichtung 18 zweckmäßig in einem hohen Takt erfasst werden, z. B. im zweistelligen ms-Bereich. Beispielsweise kann die Einrichtung 20 eine Umgebungserfassungssensorik und/oder interne Sensorik der Clientvorrichtung 12 aufweisen. Die Sensorik kann ein Sensorsignal berührungslos oder berührend erfassen. Die Sensorik kann beispielsweise ein Radar, einen Laserscanner (Lidar), einen Ultraschallsensor, einen Geschwindigkeitssensor, einen Beschleunigungssensor, einen Wegsensor, einen Winkelsensor, ein Positionssensor (bzw. Positionsbestimmungssystem - z. B. GPS), ein Thermometer, ein Hygrometer, ein Manometer und/oder ein Mikrofon aufweisen.

Es ist auch möglich, dass die Einrichtung 18 eine Benutzereingabeeinrichtung aufweist, mit der Benutzereingaben in Form von Sensorsignalen, erfassbar sind. Die Benutzereingabeeinrichtung kann Benutzereingaben visuell, akustisch und/oder haptisch erfassen. Die Benutzereingabeeinrichtung kann beispielsweise eine Kamera, einen Schalter, eine Tastatur, eine Maus, einen Knopf, einen Controller, eine berührungsempfindliche Anzeige, ein Mikrofon und/der jegliches anders Bediengerät aufweisen.

Die Einrichtung 20 kann empfangene Betriebsbefehle zum Betreiben der Clientvorrichtung 12 ausführen. Ein Betrieb der Clientvorrichtung 12 kann somit entsprechend dem empfangenen Betriebsbefehle angepasst werden. Die Clientvorrichtung 12 kann einen Betriebsbefehl zum Betreiben der Clientvorrichtung 12 von den Recheninfrastrukturen 14, 16 empfangen.

Die Einrichtung 20 kann beispielsweise mindestens einen Aktor, z. B. Lenkaktor, Antrieb, Ventil usw., aufweisen. Es ist auch möglich, dass die Einrichtung 20 eine Benutzerausgabeeinrichtung aufweist, mit der Informationen an einen Benutzer ausgebbar sind. Die Benutzerausgabeeinrichtung kann Informationen visuell, akustisch und/oder haptisch ausgeben. Beispielsweise kann die Benutzerausgabeeinrichtung eine Anzeige, einen Lautsprecher, einen Signalgeber usw. aufweisen.

Die Software-Komponente 22 der ersten Recheninfrastruktur 14 kann im Normalbetrieb Betriebsbefehle zum Betreiben der Clientvorrichtung 12 an die Clientvorrichtung 12 senden. Die Software-Komponente 24 der zweiten Recheninfrastruktur 16 kann im Redundanzbetrieb Betriebsbefehle zum Betreiben der Clientvorrichtung 12 an die Clientvorrichtung 12 senden. Beispielsweise kann die Software-Komponenten 22 im Normalbetrieb und die Software-Komponente 24 im Redundanzbetrieb Signale von der mindestens einen Einrichtung 18 empfangen, diese zum Erstellen von Betriebsbefehlen verarbeiten und die erstellten Betriebsbefehle zum Betreiben der mindestens einen Einrichtung 20 der Clientvorrichtung 12 an die Clientvorrichtung 12 senden.

Prinzipiell können die Software-Komponenten 22, 24 gleich ausgeführt sein. Beispielsweise können die Software-Komponenten 22, 24 jeweils einen Statusmodellierer 26, 28 einen Umgebungsmodellierer 30, 32 und/oder einen Betriebsbefehlersteller 34, 36 aufweisen, die bevorzugt jeweils als funktionale Einheiten eines Softwareprogramms implementiert sein können.

Der Statusmodellierer 26, 28 kann ein datenbasiertes Abbild oder Statusmodell der Clientvorrichtung 12 aufweisen. Sofern die Clientvorrichtung 12 mit einer Umgebung interagiert, kann hier zusätzlich auch ein datenbasiertes Umgebungsmodell einbezogen werden. Basierend auf den empfangenen Sensorsignalen der Clientvorrichtung 12 und ggf. dem Umgebungsmodell kann das Statusmodell aktualisiert werden. So kann bspw. stets ein aktueller Status bzw. Zustand der Clientvorrichtung 12 modelliert werden. Für jeden Zeitschritt kann der Statusmodellierer 26, 28 relevante Modellparameter an den Betriebsbefehlersteller 34, 36 übermitteln. Die Modellparameter können aus dem Statusmodell unter Berücksichtigung der Sensorsignale der Clientvorrichtung 12 und ggf. des Umgebungsmodells bspw. über Kennfelder, Tabellen, Zuordnungen, Algorithmen usw. abgeleitet werden. Die Modellparameter können abhängig von der Clientvorrichtung 12 gewählt werden. Zusätzlich können die Sensorsignale der Clientvorrichtung 12 an den Betriebsbefehlersteller 34, 36 ausgegeben werden.

Der Umgebungsmodellierer 30, 32 kann ein datenbasiertes Abbild der Umgebung der Clientvorrichtung 12 aufweisen und als Umgebungsmodell an den Statusmodellierer 26, 28 ausgeben. Es ist möglich, dass das Umgebungsmodell fest vorgegeben und unveränderlich ist, z. B. Kartendaten. Es ist allerdings auch möglich, dass der Umgebungsmodellierer 30, 32 das Umgebungsmodell anpassen kann, z. B. in Reaktion auf eine Wechselwirkung zwischen der Clientvorrichtung 12 auf der tatsächlichen Umgebung (z. B. Baumaschine, Fertigungsmaschine). Veränderungen an dem Umgebungsmodell können bspw. mittels Informationen, die aus den Sensorsignalen der Clientvorrichtung 12 abgeleitet werden, angepasst werden.

Es ist möglich, dass das Umgebungsmodell mittels maschinellem Lernen erst während der Nutzung der Clientvorrichtung 12 erstellt wird (z. B. SLAM) und/oder während des Betriebs aktualisiert oder optimiert wird, z. B. mittels Sensorsignalen der Clientvorrichtung 12. Es ist auch möglich, dass das Umgebungsmodell (ggf. erfahrungsbasiert) ein spontanes Auftauchen von nicht-kartierten Hindernissen bei einer autonomen Navigation berücksichtigen oder vorhersagen kann.

Der Betriebsbefehlersteller 34, 36 kann die Modellparameter von dem Statusmodellierer 26, 28 und optional die zugehörigen Sensorsignale der Clientvorrichtung 12 empfangen. Über Planungs-/Steuerungs- und/oder Regelungsfunktionen kann der Betriebsbefehlersteller 34, 36 Betriebsbefehle aus den Modellparametern und optional den zugehörigen Sensorsignalen der Clientvorrichtung 12 erstellen. Die Betriebsbefehle können mittels einer Kommunikationsschnittstelle der jeweiligen Rechnerinfrastruktur 14, 16 zu der Clientvorrichtung 12 gesendet werden.

Eine Besonderheit der vorliegenden Offenbarung besteht in einer Steuerung des Redundanzbetriebs (Redundanz-Steuerung), nämlich konkret darin, wie in den Redundanzbetrieb geschaltet wird. Während die erste Recheninfrastruktur 14 die Clientvorrichtung 12 betreibt, überwacht die Clientvorrichtung 12 eine Kommunikation zwischen der Clientvorrichtung 12 und der ersten Recheninfrastruktur 14 auf ein Auftreten einer Störung. Tritt eine Störung auf, weist die Clientvorrichtung 12 die zweite Recheninfrastruktur 16 an, die Clientvorrichtung 12 zu betreiben bzw. ein Betreiben der Clientvorrichtung 12 zu übernehmen.

Die Störung kann bspw. eine Trennung der Kommunikation, einen Ausfall der Kommunikation, ein Überschreiten einer vorgegebenen Antwortzeit von der ersten Recheninfrastruktur 14 und/oder ein Unterschreiten einer vorgegebenen Datentransfergeschwindigkeit von der ersten Recheninfrastruktur 14 aufweisen. Die Störung kann bspw. direkt durch eine Störung der Kommunikation bewirkt sein, z. B. Paketverlust, Ausfall von Kommunikationsknoten usw. Die Störung kann auch mittelbar durch die erste Recheninfrastruktur 14 bewirkt sein, z. B. (teilweiser) Ausfall der ersten Recheninfrastruktur 14.

Beispielsweise kann die Clientvorrichtung 12 einen Überwacher 38, ein Recheninfrastruktur-Register 40 und/oder einen Redundanz-Steuerabschnitt 42 aufweisen.

Der Überwacher 38 kann die Kommunikation mit der ersten Recheninfrastruktur 14 auf das Auftreten einer Störung hin überwachen. Vorzugsweise kann der Überwacher 38 als Hardware und/oder als funktionale Einheiten eines Softwareprogramms implementiert sein. Bevorzugt kann der Überwacher 38 eine Dienstgüte bzw. eine Quality-of-Service (QoS) der Kommunikation mit der ersten Recheninfrastruktur 14 überwachen. Bspw. kann eine Latenzzeit (Verzögerung der Ende-zu-Ende-Übertragung), ein Jitter (Abweichung der Latenzzeit von ihrem Mittelwert), eine Paketverlustrate (Wahrscheinlichkeit, dass einzelne IP-Pakete bei der Übertragung verloren gehen oder - bei Echtzeitdiensten - ihr Ziel zu spät erreichen) und/oder einen Durchsatz (pro Zeiteinheit im Mittel übertragene Datenmenge) überwacht und bspw. von dem Überwacher 38 oder dem Redundanz-Steuerabschnitt 42 ausgewertet werden.

Der Überwacher 38 kann Informationen bezüglich des Überwachens, insbesondere bezüglich des Auftretens einer Störung an den Redundanz-Steuerabschnitt 42 ausgeben. Der Redundanz-Steuerabschnitt 42 kann die von dem Überwacher 38 empfangenen Informationen auswerten. Das Auswerten kann dabei umfassen, zu erkennen, ob die aktuelle Störung auf Netzwerkebene bzw. Kommunikationsebene oder auf Ebene der ersten Recheninfrastruktur 14 oder im Zweifelsfall auf beiden Ebenen aufgetreten ist.

Beim Erkennen eines Auftretens einer Störung, kann der Redundanz-Steuerabschnitt 42 die zweite Recheninfrastruktur 16 anweisen, die Clientvorrichtung 12 (weiter-) zu betreiben. Optional kann der Redundanz-Steuerabschnitt 42 eine Adresse der zweiten Recheninfrastruktur 16 aus dem Recheninfrastruktur-Register 40 entnehmen. Das Recheninfrastruktur-Register 40 kann bspw. über die erste Recheninfrastruktur 14 aktualisierbar sein. Gemäß dem Anweisen kann die zweite Recheninfrastruktur 16 Betriebsbefehle an die Clientvorrichtung 12 übersenden, vorzugsweise zum Betreiben der mindestens einen Einrichtung 20 der Clientvorrichtung 12.

Die Clientvorrichtung 12, vorzugsweise der Redundanz-Steuerabschnitt 42 der Clientvorrichtung 12, kann die zweite Recheninfrastruktur 16 bspw. über eine ständig aktiv gehaltene Kommunikationsverbindung zwischen der Clientvorrichtung 12 und der zweiten Recheninfrastruktur 16 anweisen, die Clientvorrichtung 12 zu betreiben. Alternativ kann die Clientvorrichtung 12, vorzugsweise der Redundanz-Steuerabschnitt 42 der Clientvorrichtung 12, bspw. zunächst eine Kommunikationsverbindung zwischen der Clientvorrichtung 12 und der zweiten Recheninfrastruktur 16 initiieren bzw. herstellen und darüber die zweite Recheninfrastruktur 16 anweisen, die Clientvorrichtung 12 zu betreiben.

Beispielsweise kann die Clientvorrichtung 12, vorzugsweise deren Redundanz-Steuerabschnitt 42, parallel die zweite Recheninfrastruktur 16 anweisen und versuchen, auf einen anderen Kommunikationskanal (z. B. von Funknetz über 4G oder 5G zu WiFi-Verbindung) zwischen der Clientvorrichtung 12 und der ersten Recheninfrastruktur 14 zu wechseln. Alternativ kann die Clientvorrichtung 12, vorzugsweise deren Redundanz-Steuerabschnitt 42, bspw. die zweite Recheninfrastruktur 16 erst dann anweisen, nachdem vergeblich versucht wurde, auf einen anderen Kommunikationskanal zwischen der Clientvorrichtung 12 und der ersten Recheninfrastruktur 14 zu wechseln.

Während des Betriebs der Clientvorrichtung 12 mittels der zweiten Recheninfrastruktur 16 kann die Clientvorrichtung 12 die Kommunikation mit der ersten Recheninfrastruktur 14 weiter überwachen, z. B. mittels des Überwachers 38. Erkennt die Clientvorrichtung 12, vorzugsweise die Redundanz-Steuerabschnitt 42 und/oder der Überwacher 38, dass die Störung weggefallen ist, kann die Clientvorrichtung 12 die erste Recheninfrastruktur 14 anweisen, die Clientvorrichtung 12 wieder zu betreiben. Außerdem kann die Clientvorrichtung 12 die zweite Recheninfrastruktur 16 anweisen, das Betreiben der Clientvorrichtung 12 zu beenden. Alternativ oder zusätzlich kann die Clientvorrichtung 12 eine Kommunikation mit der zweiten Recheninfrastruktur 16 beenden bzw. inaktivieren.

Es ist möglich, dass die zweite Recheninfrastruktur 16 als sogenannte heiße Redundanz (erste und zweite Recheninfrastruktur 14, 16 führen parallel dieselben Funktionen aus), warme oder kalte bzw. Standby-Redundanz (zweite Recheninfrastruktur 16 arbeitet erst vollständig oder überhaupt erst, wenn zu ihr umgeschaltet wird) betrieben werden kann. In einer Weiterbildung besteht die Möglichkeit, dass ein Status der zweiten Recheninfrastruktur 16 zwischen einer heißen Redundanz und einer warmen oder kalten bzw. Standby-Redundanz wechselbar ist. Ein Wechsel kann bspw. in Abhängigkeit von einer Ressourcenoptimierung oder -anpassung des verteilten Automatisierungssystems 10, in Abhängigkeit von einem Status der Clientvorrichtung 12 und/oder einem Status der Kommunikation zwischen der Clientvorrichtung 12 und der ersten Recheninfrastruktur 14 durchgeführt werden. Der Wechsel kann durch die erste Clientvorrichtung 12 und/oder die erste Recheninfrastruktur 14 initiiert werden.

Es ist auch möglich, dass die Clientvorrichtung 12 in der Lage ist, sich zumindest temporär ohne externen Betrieb mittels der ersten oder zweiten Recheninfrastruktur 14, 16 selbst bzw. eigenständig zu betreiben. Hierfür kann die Clientvorrichtung 12 hardwareseitig und softwareseitig bspw. eine Redundanzbetrieb-Komponente 44 aufweisen. Die Redundanzbetrieb-Komponente 44 kann die Clientvorrichtung 12 eigenständig betreiben. Beispielsweise kann die Redundanzbetrieb-Komponente 44 Signale von der mindestens einen Einrichtung 18 empfangen und/oder Betriebsbefehle an die mindestens eine Einrichtung 20 ausgeben. Die Redundanzbetrieb-Komponente 44 kann einen verringerten Funktionsumfang gegenüber einem Betrieb mittels der ersten und zweiten Recheninfrastruktur 14,16 aufweisen. Bspw. können nur ein Teil der Signale von der mindestens einen Einrichtung 18 verarbeitet bzw. ausgewertet werden und/oder nur ein Teil der mindestens einen Einrichtung 20 mit Betriebsbefehlen angewiesen werden. Beispielsweise kann die Redundanzbetrieb-Komponente 44 einen SLAM-Algorithmus mit verringertem Leistungsumfang im Vergleich zum Ausführen mittels der ersten Recheninfrastruktur 14 ausführen.

Bei Auftreten der Störung kann die Redundanzbetrieb-Komponente 44 die Clientvorrichtung 12 mit einem verringerten Funktionsumfang im Vergleich zum Betreiben mittels der ersten Recheninfrastruktur 14 bspw. solange betreiben, bis die zweite Recheninfrastruktur 16 die Clientvorrichtung 12 betreibt bzw. einen Betrieb der Clientvorrichtung 12 übernimmt.

Alternativ kann die Clientvorrichtung 12 in bestimmten Situationen, vorzugsweise in Abhängigkeit von der aufgetretenen Störung, von einem Status der Clientvorrichtung 12 und/oder einem Status der zweiten Recheninfrastruktur 16, entscheiden, dass bei Auftreten der Störung nicht die zweite Recheninfrastruktur 16 zum Betreiben der Clientvorrichtung 12 angewiesen wird, sondern die Clientvorrichtung 12 sich selbst mit verringertem Funktionsumfang betreibt, vorzugsweise temporär. Eine solche Situation kann bspw. eintreten, wenn die Störung nur geringfügig ist, wenn eine Kommunikation mit der zweiten Recheninfrastruktur 16 gestört ist (z. B. überwacht durch den Überwacher 38) und/oder die Clientvorrichtung 12 aus sonstigen Gründen entsprechend entscheidet.

Es ist möglich, dass sich für eine Wahl einer optimalen Verfahrensvariante (z. B. Nutzung der Redundanzbetrieb-Komponente 44 als Redundanz oder Nutzung der zweiten Recheninfrastruktur 16 als Redundanz oder optional Wechsel des Kommunikationskanals mit der ersten Recheninfrastruktur 14) Anweisungen (Optimierungsfunktionen) bereitstellen lassen, die bspw. von dem Redundanz-Steuerabschnitt 42 ausführbar sind. Bevorzugt kann die Wahl damit dynamisch an veränderte Umstände angepasst werden. Bspw. kann über explorative Machine-Learning-Verfahren eine Selbstoptimierung nach Kriterien, z. B. Minimierung der Latenzen, bereitgestellt werden. In diesem Kontext lässt sich bspw. durch die Bereitstellung verschiedenster Möglichkeiten für Kommunikation und Berechnung auch eine optimale (dynamische) Konfiguration ermitteln. In diesem Sinne lässt sich das Verfahren auch erweitern, um geräteseitig automatisch stets die optimale Anbindung möglicher Infrastrukturen zu nutzen und gleichzeitig Redundanzen nach optimierter Strategie vorzuhalten.

Wie erläutert, kann es möglich sein, dass die Clientvorrichtung 12 von der ersten Recheninfrastruktur 14 mittels eines sich fortwährend aktualisierenden Statusmodells des Statusmodellierers 26 betrieben wird. Vorzugsweise kann dieses Statusmodell in der aktuellsten Version der zweiten Recheninfrastruktur 16 zur Verfügung gestellt werden, damit die zweite Recheninfrastruktur 16 die Clientvorrichtung 12 betreiben kann. Das Statusmodel kann bevorzugt dem Statusmodellierer 28 der zweiten Recheninfrastruktur 16 zur Verfügung gestellt werden.

Beispielsweise kann das jeweils aktuelle Statusmodell fortlaufend von der ersten Recheninfrastruktur 14 (z. B. direkt) zu der zweiten Recheninfrastruktur 16 übermittelt werden, während die erste Recheninfrastruktur 14 die Clientvorrichtung 12 noch betreibt. Die zweite Recheninfrastruktur 16 kann dann das übermittelte jeweils aktuelle bzw. aktuellste Zustandsmodells zum Betreiben der Clientvorrichtung 12 verwenden, während die zweite Recheninfrastruktur 16 die Clientvorrichtung 12 bei Auftreten der Störung betreibt bzw. wenn die Clientvorrichtung 12 die zweite Recheninfrastruktur 16 anweist, die Clientvorrichtung 12 zu betreiben.

Alternativ oder zusätzlich kann das jeweils aktuelle Statusmodell fortlaufend von der ersten Recheninfrastruktur 14 zu der Clientvorrichtung 12 übermittelt werden, während die erste Recheninfrastruktur 14 die Clientvorrichtung 12 noch betreibt. Das jeweils aktuelle Statusmodell kann in einem Statusmodell-Speicherabschnitt 46 der Clientvorrichtung 12 gespeichert werden. Das im Statusmodell-Speicherabschnitt 46 abgespeicherte Statusmodell kann von der Clientvorrichtung 12 an die zweiten Recheninfrastruktur 16 übermittelt werden, wenn die Clientvorrichtung 12 die zweite Recheninfrastruktur 16 anweist, die Clientvorrichtung 12 zu betreiben.

Es ist möglich, dass die Technik bezüglich des redundanten Vorhaltens des Statusmodells entsprechend auf ein redundantes Vorhalten des Umgebungsmodells der Clientvorrichtung 12 angewendet wird, sofern vorhanden und gewünscht.

Bei einem etwaigen Rückverbinden mit der ersten Recheninfrastruktur 14 nach dem Wegfall kann der Störung kann wiederum der ersten Recheninfrastruktur das aktuelle Statusmodell und/oder das aktuelle Umgebungsmodell übermittelt werden, z. B. von der Clientvorrichtung 12 oder der zweiten Recheninfrastruktur 16.

Eine Möglichkeit zur Kompensation der Verzögerung bis zur Aktivierung der Redundanzbetrieb-Komponente 44 oder bis zur Aktivierung der zweiten Recheninfrastruktur 16 kann durch die prädiktive Übertragung von Betriebsbefehlhypothesen von der ersten Recheninfrastruktur 14 bestehen. Eine entsprechende Technik ist in der europäische Patentanmeldung Nr. 20176760.5 vom 27. Mai 2020 mit dem Titel "Verfahren und Vorrichtung zur Latenzkompensation" offenbart, die hierin bezüglich des Verfahrens und der Vorrichtung zur Latenzkompensation durch explizite Bezugnahme mitaufgenommen bzw. einbezogen ist.

Es ist möglich, dass die Clientvorrichtung 12 nicht nur auf eine Störung, die in der Kommunikation mit der ersten Recheninfrastruktur 14 bereits aufgetreten ist, reagiert. Zusätzlich kann die die Clientvorrichtung 12 prädiktiv arbeiten und eine etwaig auftretende Störung vorhersagen. Hierfür kann die Clientvorrichtung 12, vorzugsweise deren Redundanz-Steuerabschnitt 42, ein Auftreten einer Störung der Kommunikation zwischen der Clientvorrichtung 12 und der ersten Recheninfrastruktur 14 vorhersagen. Beispielweise kann die Vorhersage auf einer aktuellen Position der Clientvorrichtung 12, einer Dienstgüte-Überwachung der Kommunikation und/oder historischen Informationen über eine frühere bzw. bisherige Kommunikation zwischen der Clientvorrichtung 12 und der ersten Recheninfrastruktur 14 basieren. Für die Vorhersage können auch Methoden der künstlichen Intelligenz verwendet werden. Sofern mehrere Clientvorrichtungen im verteilten Automatisierungssystem 10 vorhanden sind, kann auch auf Informationen bzw. Erfahrungen ("shared experience") der anderen Clientvorrichtungen bei der Vorhersage zurückgegriffen werden.

Bei Vorhersage der Störung kann die Clientvorrichtung 12, bevorzugt deren Redundanz-Steuerabschnitt 42, die zweite Recheninfrastruktur 16 anweisen, die Clientvorrichtung 12 in einem Zeitraum, zu dem die Störung vorhergesagt wurde, zu betreiben. Alternativ kann sich Clientvorrichtung 12 in dem Zeitraum, zu dem die Störung vorhergesagt wurde, mit einem verringerten Funktionsumfang eigenständig bzw. selbst betreiben, z. B. mittels der Redundanzbetrieb-Komponente 44.

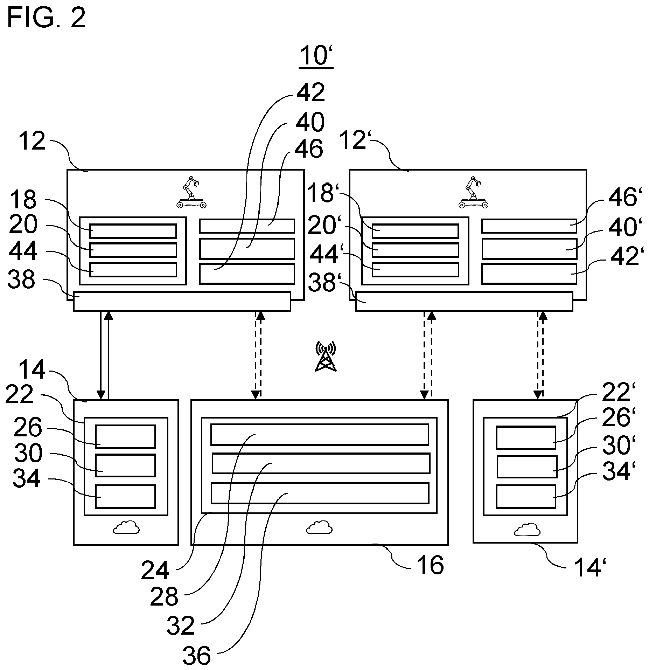

Die Figur 2 zeigt rein beispielhaft, wie die Redundanz-Steuerung, die beispielhaft anhand der Figur 1 erläutert wurde, skalierbar sein kann.

Das verteilte Automatisierungssystem 10' von Figur 2 weist im Vergleich zur Figur 1 (mindestens) eine weitere Clientvorrichtung 12' und eine dritte Recheninfrastruktur 14' auf. Die weitere Clientvorrichtung 12' kann zumindest teilweise wie die Clientvorrichtung 12 oder auch anders konfiguriert sein. Die dritte Recheninfrastruktur 14' kann zumindest teilweise wie die erste Recheninfrastruktur 14 oder auch anders konfiguriert sein. Die dritte Recheninfrastruktur 14' kann die weitere Clientvorrichtung 12' im Normalbetrieb betreiben. Die weitere Clientvorrichtung 12', vorzugsweise deren Überwacher 38', kann eine Kommunikation zwischen der weiteren Clientvorrichtung 12' und der dritten Recheninfrastruktur 14' auf ein Auftreten einer Störung überwachen. Bei Auftreten einer Störung kann die weitere Clientvorrichtung 12', vorzugsweise deren Redundanz-Steuerabschnitt 42', die zweite Recheninfrastruktur 16 anweisen, die zweite Clientvorrichtung 12' zu betreiben.

Unter erneuter Bezugnahme auf Figur 1 ist nachfolgend noch ein konkretes Ausführungsbeispiel beschrieben, um die hierin offenbarten Techniken nochmals an einem Beispiel zu erläutern.

In diesem Ausführungsbeispiel wird ein mobiles Robotersystem als die Clientvorrichtung 12 betrachtet, dessen Softwareservices zur autonomen Navigation und erweiterten Funktionen der Umgebungswahrnehmung teilweise auf einer Edge-Cloudumgebung als die erste Recheninfrastruktur 14 ausgelagert sind. Hier werden bspw. die Sensorwerte der Einrichtung 18 direkt an die Edge-Cloudumgebung geschickt und das mobile Robotersystem selbst nimmt nur noch die entsprechenden Aktorbefehle für die Einrichtung 20 in einem festen Zyklus entgegen. Ein Teil der ausgelagerten Funktionen unterliegt Echtzeitanforderungen für die autonome Navigation, ein anderer Teil sind nicht-echtzeitkritische Software-Services zur Umgebungswahrnehmung, bspw. 3D-Kartierung, die von der Leistungsfähigkeit der Edge-Cloudumgebung profitieren. Die Edge-Cloudumgebung ist über eine 5G-Funkstrecke mit dem mobilen Robotersystem verbunden, die im Regelbetrieb die QoS-Anforderungen bezüglich Latenz und Bandbreite gewährleistet. Als Redundanz stehen auf Netzwerkebene (lokal) ein LiFi-Netzwerk als weiterer Kommunikationskanal und zwecks Recheninfrastruktur eine Public-Cloudumgebung als die zweite Recheninfrastruktur 16 zur Verfügung. Für die Berechnung der Navigation sind Statusinformationen nötig, die bspw. die Position des mobilen Robotersystems auf einer Umgebungskarte verwalten. Die zusätzlichen Bildverarbeitungs-Services sind statuslos.

Im Falle des Ausfalls der primären 5G-Netzwerkverbindung, würde dies über das mobile Robotersystem detektiert, und es erfolgt ein nahtloser Wechsel auf das LiFi-Netzwerk. Die aktive Nutzung der Netzwerkredundanz wird zudem aktiv angestoßen, wenn das mobile Robotersystem Bereiche der Umgebung befährt, in denen erfahrungsbasiert das 5G-Netz eine schlechte Abdeckung hat oder vermehrt Interferenzen auftreten. Beim Ausfall der Edge-Cloudumgebung, dortigen Ressourcenprobleme oder beim Ausfall der Kommunikationsstrecken zur Edge-Cloudumgebung wird die Public-Cloudumgebung aktiviert, die einen redundanten Software-Stack als die Software-Komponente 22 vorhält. Zur Einsparung von Ressourcen ist die Public-Cloudumgebung zunächst passiv, d.h. es müssen mehrere Steuerungszyklen gewartet werden, bis Statusinformationen vom mobilen Robotersystem übertragen und der Software-Stack auf der Public-Cloudumgebung aktiv geschaltet ist. Hier übernimmt dann zunächst bis zur Übergabe eine lokale Redundanz, d.h. die Redundanzbetrieb-Komponente 44 des mobilen Robotersystems, mit weniger Performance bspw. für optimierte Pfadplanung, aber mit immer noch funktionaler autonomer Navigation.

Es ist möglich, dass die redundante Public-Cloudumgebung nicht über vergleichbare Latenzen wie die nähere Edge-Cloudumgebung verfügt, sodass davon ausgegangen werden kann, dass die Softwaredienste auf der Public-Cloudumgebung mit beschränkter Leistung oder Funktionsumfang laufen. Falls hier die Echtanforderungen nicht erfüllt werden können, könnte eine Optimierung dafür sorgen, dass diese einzelnen Funktionen/Services auch weiterhin lokal auf dem mobilen Robotersystem laufen (ggf. auch als heiße Redundanz). Selbiges gilt prinzipiell auch für die nicht-echtzeitkritischen Bildverarbeitungsfunktionen, wobei zwischen den Instanzen Leistungsunterschiede oder Unsicherheiten in der Berechnung durch verschiedene Implementierungen oder Varianten der Services hinsichtlich der Infrastrukturen bestehen können. Im Sinne der Optimierung und festgelegten Leistungskriterien würden auch hier dynamisch jeweils (aktive) Redundanzen erzeugt und die optimierten Ergebnisse weiterverwendet. Dies bezieht sich auch auf Implementierungen von Softwarefunktionen über verschiedene Ansätze, die parallel laufen und unter bestimmten Umständen jeweils messbare Vor- oder Nachteile aufweisen. In diesem Kontext kann auch ein prinzipieller Wechsel der Methodik, bspw. der Wechsel von 3D- auf 2D-Navigation in Betracht gezogen werden.

Bei Betrachtung eines zweiten mobilen Robotersystems als weitere Clientvorrichtung 12' gemäß Figur 2 lässt sich der Software-Stack der Redundanz jeweils horizontal skalieren. Die Optimierung betrifft jetzt mehrere Agenten, die sich Netzwerk- und Rechenressourcen teilen. In diesem Sinne wird das Optimierungsproblem auf mehrere Agenten erweitert, die bspw. die Ressourcenbelegung dynamisch untereinander aushandeln können.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere sind die Merkmale der unabhängigen Ansprüche unabhängig voneinander offenbart. Zusätzlich sind auch die Merkmale der Unteransprüche unabhängig von sämtlichen Merkmalen der unabhängigen Ansprüche offenbart.

### Bezugszeichenliste

- 10: verteiltes Automatisierungssystem
- 12: Clientvorrichtung
- 14: erste Recheninfrastruktur (Haupt-Recheninfrastruktur)
- 16: zweite Recheninfrastruktur (Redundanz-Recheninfrastruktur)
- 18: Einrichtung
- 20: Einrichtung
- 22: Software-Komponente
- 24: Software-Komponente
- 26: Statusmodellierer
- 28: Statusmodellierer
- 30: Umgebungsmodellierer
- 32: Umgebungsmodellierer
- 34: Betriebsbefehlersteller
- 36: Betriebsbefehlersteller
- 38: Überwacher
- 40: Recheninfrastruktur-Register
- 42: Redundanz-Steuerabschnitt
- 44: Redundanzbetrieb-Komponente
- 46: Statusmodell-Speicherabschnitt

## Patentansprüche

1. Verfahren zur Redundanz-Steuerung in einem verteilten Automatisierungssystem (10), vorzugsweise Echtzeit-Automatisierungssystem (10), zum Betreiben einer Clientvorrichtung (12) des verteilten Automatisierungssystems (10), aufweisend:
mittels der Clientvorrichtung (12), Überwachen einer Kommunikation zwischen der Clientvorrichtung (12) und einer ersten, die Clientvorrichtung (12) betreibenden Recheninfrastruktur (14) des verteilten Automatisierungssystems (10) auf ein Auftreten einer Störung, und
mittels der Clientvorrichtung (12), beim Auftreten der Störung, Anweisen einer zweiten Recheninfrastruktur (16) des verteilten Automatisierungssystems (10), die Clientvorrichtung (12) zu betreiben.

2. Verfahren nach Anspruch 1, wobei:
das Anweisen der zweiten Recheninfrastruktur (16) über eine ständig aktiv gehaltene Kommunikationsverbindung zwischen der Clientvorrichtung (12) und der zweiten Recheninfrastruktur (16) erfolgt; oder
das Anweisen der zweiten Recheninfrastruktur (16) ein Herstellen einer Kommunikationsverbindung zwischen der Clientvorrichtung (12) und der zweiten Recheninfrastruktur (16) aufweist, initiiert mittels der Clientvorrichtung (12).

3. Verfahren nach einem der vorherigen Ansprüche, ferner aufweisend:
mittels der Clientvorrichtung (12), bei Wegfall der Störung, Anweisen der zweiten Recheninfrastruktur (16) das Betreiben der Clientvorrichtung (12) zu beenden und/oder Beenden einer Kommunikation mit der zweiten Recheninfrastruktur (16).

4. Verfahren nach einem der vorherigen Ansprüche, ferner aufweisend:
mittels der Clientvorrichtung (12), bei Wegfall der Störung, Anweisen der ersten Recheninfrastruktur (14), die Clientvorrichtung (12) wieder zu betreiben; und optional
Übermitteln eines aktuellen Statusmodells, das einen aktuellen Zustand der Clientvorrichtung (12) angibt, und/oder eines aktuellen Umgebungsmodells, das eine aktuelle Umgebung der Clientvorrichtung (12) angibt, von der Clientvorrichtung (12) oder der zweiten Recheninfrastruktur (16) zu der ersten Recheninfrastruktur (14) zum Verwenden beim Betreiben der Clientvorrichtung (12).

5. Verfahren nach einem der vorherigen Ansprüche, wobei:
die Clientvorrichtung (12) eine Maschine, ein Roboter, ein Endgerät oder ein, vorzugsweise autonomes, Fahrzeug ist.

6. Verfahren nach einem der vorherigen Ansprüche, wobei:
die Störung eine Trennung der Kommunikation, einen Ausfall der Kommunikation, ein Überschreiten einer vorgegebenen Antwortzeit, ein Unterschreiten einer vorgegebenen Datentransfergeschwindigkeit und/oder ein Abweichen von einer Dienstgüte-Anforderung bezüglich der Kommunikation aufweist.

7. Verfahren nach einem der vorherigen Ansprüche, wobei:
das Verfahren ferner ein bei Auftreten der Störung eigenständiges Betreiben der Clientvorrichtung (12) mit einem verringerten Funktionsumfang im Vergleich zum Betreiben mittels der ersten Recheninfrastruktur (14), bis die zweite Recheninfrastruktur (16) die Clientvorrichtung (12) betreibt, aufweist; oder
mittels der Clientvorrichtung (12), bei Auftreten der Störung, wahlweise das Anweisen der zweiten Recheninfrastruktur (16) oder ein eigenständiges Betreiben der Clientvorrichtung (12) mit einem verringerten Funktionsumfang im Vergleich zum Betreiben mittels der ersten Recheninfrastruktur (14) durchgeführt wird, vorzugsweise in Abhängigkeit von der aufgetretenen Störung, von einem Status der Clientvorrichtung (12) und/oder einem Status der zweiten Recheninfrastruktur (16).

8. Verfahren nach einem der vorherigen Ansprüche, wobei die Clientvorrichtung (12) mittels eines Statusmodells, das einen jeweils aktuellen Zustand der Clientvorrichtung (12) angibt, von der ersten Recheninfrastruktur (14) betrieben wird, und das Verfahren ferner aufweist:
Übermitteln, vorzugsweise fortlaufendes Übermitteln, des Statusmodells von der ersten Recheninfrastruktur (14) zu der zweiten Recheninfrastruktur (16) während die erste Recheninfrastruktur (14) die Clientvorrichtung (12) betreibt, und
mittels der zweiten Recheninfrastruktur (16), Verwenden des übermittelten Statusmodells zum Betreiben der Clientvorrichtung (12) während die zweite Recheninfrastruktur (16) die Clientvorrichtung (12) bei Auftreten der Störung betreibt.

9. Verfahren nach einem der Ansprüche 1 bis 7, wobei die Clientvorrichtung (12) mittels eines Statusmodells, das einen jeweils aktuellen Zustand der Clientvorrichtung (12) angibt, von der ersten Recheninfrastruktur (14) betrieben wird, und das Verfahren ferner aufweist:
Übermitteln, vorzugsweise fortlaufendes Übermitteln, des Statusmodells von der ersten Recheninfrastruktur (14) zu der Clientvorrichtung (12) während die erste Recheninfrastruktur (14) die Clientvorrichtung (12) betreibt, und
mittels der Clientvorrichtung (12), Übermitteln des übermittelten Statusmodells an die zweite Recheninfrastruktur (16) zum Betreiben der Clientvorrichtung (12) beim Anweisen der zweiten Recheninfrastruktur (16).

10. Verfahren nach einem der vorherigen Ansprüche, ferner aufweisend:
Vorhersagen eines Auftretens einer Störung der Kommunikation zwischen der Clientvorrichtung (12) und der ersten Recheninfrastruktur (14) basierend auf einer aktuellen Position der Clientvorrichtung (12), einer Dienstgüte-Überwachung der Kommunikation und/oder historischen Informationen über eine frühere Kommunikation zwischen der Clientvorrichtung (12) und der ersten Recheninfrastruktur (14).

11. Verfahren nach Anspruch 10, ferner aufweisend:
mittels der Clientvorrichtung (12), bei Vorhersage des Auftretens der Störung, Anweisen der zweiten Recheninfrastruktur (16), die Clientvorrichtung (12) in einem Zeitraum, zu dem die Störung vorhergesagt wurde, zu betreiben; oder
bei Vorhersage des Auftretens der Störung, eigenständiges Betreiben der Clientvorrichtung (12) mit einem verringerten Funktionsumfang im Vergleich zum Betreiben mittels der ersten Recheninfrastruktur (14) in einem Zeitraum, zu dem die Störung vorhergesagt wurde.

12. Verfahren nach einem der vorherigen Ansprüche, ferner aufweisend:
mittels der Clientvorrichtung und/oder der ersten Recheninfrastrukturvorrichtung, Entscheiden, ob die zweite Recheninfrastruktur (16) zumindest temporär als heiße Redundanz oder als warme, kalte oder Standby-Redundanz zu der ersten Recheninfrastruktur (14) betrieben wird, vorzugsweise in Abhängigkeit von einem Status der Clientvorrichtung (12), einem Status der ersten Recheninfrastruktur (14), der Kommunikation zwischen der Clientvorrichtung (12) und der ersten Recheninfrastruktur (14) und/oder einer Vorhersage eines Auftretens einer Störung der Kommunikation zwischen der Clientvorrichtung (12) und der ersten Recheninfrastruktur (14).

13. Verfahren nach einem der vorherigen Ansprüche, wobei das verteilte Automatisierungssystem (10') eine weitere Clientvorrichtung (12') aufweist, wobei das Verfahren ferner aufweist:
mittels der weiteren Clientvorrichtung (12'), Überwachen einer Kommunikation zwischen der weiteren Clientvorrichtung (12') und einer dritten, die weitere Clientvorrichtung (12') betreibenden Recheninfrastruktur (14') des verteilten Automatisierungssystems (10') auf ein Auftreten einer Störung; und
mittels der weiteren Clientvorrichtung (12'), bei Auftreten der Störung, Anweisen der zweiten Recheninfrastruktur (16) des verteilten Automatisierungssystems (10'), die weitere Clientvorrichtung (12') zu betreiben.

14. Verteiltes Automatisierungssystem (10) mit einer Clientvorrichtung (12), einer ersten Rechnerinfrastruktur (14) und einer zweiten Rechnerinfrastruktur (16), wobei das verteilte Automatisierungssystem (10) dazu konfiguriert ist, ein Verfahren nach einem der vorherigen Ansprüche auszuführen.

15. Computerprogrammprodukt aufweisend mindestens ein computerlesbares Speichermedium mit darauf gespeicherten Anweisungen, die einen oder mehrere Computer anweisen, ein Verfahren nach einem der Ansprüche 1 bis 13 auszuführen.
